# EUROPÄISCHE PATENTSCHRIFT

(11) **EP 2 708 422 B1**
(45) Veröffentlichungstag und Bekanntmachung des Hinweises auf die Patenterteilung: **06.05.2015**
(21) Anmeldenummer: 13172884.2
(22) Anmeldetag: 19.06.2013
(51) Int. Cl.: B60R 21/013, B60R 21/0134, B60R 21/00

(54) **Kraftfahrzeug mit einer Insassenschutzeinrichtung**
Motor vehicle with a passenger protection device
Véhicule automobile avec un dispositif de protection des passagers

(30) Priorität: 14.09.2012 DE 102012018214
(43) Veröffentlichungstag der Anmeldung: 19.03.2014
(73) Patentinhaber: AUDI AG, 85045 Ingolstadt (DE)
(72) Erfinder: Giesler, Björn, 85055 Ingolstadt (DE); Kölzow, Thorsten, 85051 Ingolstadt (DE); Jakobs, Bernd, 90453 Nürnberg (DE)

(56) Entgegenhaltungen:
- WO-A1-94/11223
- DE-B4-102006 018 901

## Beschreibung

Die Erfindung betrifft ein Kraftfahrzeug mit einer für den Seitenbereich des Kraftfahrzeugs vorgesehenen Insassenschutzeinrichtung, mit einem im Seitenbereich angeordneten Sensor zum Erfassen eines Luftdrucksignals und eine Steuerungseinrichtung, die zum Auswerten des Luftdrucksignals und zum Auslösen der Insassenschutzeinrichtung in Abhängigkeit des ausgewerteten Luftdrucksignals ausgebildet ist.

Es ist üblich, Kraftfahrzeuge mit Insassenschutzeinrichtungen wie Airbags auszurüsten, die an einer oder beiden Seiten des Kraftfahrzeugs angeordnet sind. Eine druckempfindliche Sensorik erfasst einen Druckunterschied, der bei einer Kollision mit einem eindringenden Körper ansteigt. Durch den Einsatz der druckempfindlichen Sensorik können Seitenairbags bereits gezündet werden, bevor eine zusätzlich im Fahrzeug, meist auf dem Mitteltunnel, angeordnete Beschleunigungssensorik eine Kollision erkennt.

In der DE 102 34 624 A1 wird ein passives Sicherheitssystem für ein Kraftfahrzeug mit einem Precrash-Sensor vorgeschlagen. Dieser Precrash-Sensor kann durch den Aufprall entstehenden Körperschall erfassen.

Die DE 102 44 730 A1 betrifft eine Vorrichtung und ein Verfahren zur Seitenaufprallerkennung bei einem Fahrzeug. Darin wird ein Messprinzip zur Seitenaufprallerkennung beschrieben, wobei ein Luftdruckdetektor als Sensor in einem Seitenteil des Fahrzeugs angebracht ist und zur Erkennung eines Unfalls dient. Dabei wird ausgenutzt, dass bei einem Unfall die Luft im Fahrzeug in der Umgebung des Sensors komprimiert wird, sobald sich das Fahrzeug im Bereich der Aufprallstelle verformt.

Die DE 103 31 964 A1 schlägt eine Vorrichtung zur Seitenaufprallerkennung und einen Drucksensor vor, wobei der Drucksensor beim Seitenaufprall auf einen durch den Seitenaufprall entstehenden adiabatischen Druckanstieg reagiert. Zusätzlich ist ein Plausibilitätssensor vorgesehen.

Die DE 10 2006 018 901 B4 offenbart ein Kollisionserfassungssystem für eine Seitentür und ein Insassenschutzsystem. Der Oberbegriff des Anspruchs 1 ist aus dieser Schrift bekannt.

Ein Innendrucksensor erfasst einen Türinnendruck einer Seitentür des Fahrzeugs, bei einer seitlichen Kollision wird die Erhöhung des Türinnendrucks erfasst, um anschließend das Insassenschutzsystem auszulösen.

Alle bekannten Varianten sehen vor, dass ein mechanischer Aufprall eines Objekts, beispielsweise ein anderes Fahrzeug oder ein ortsfestes Objekt wie ein Baum, durch die Kollision und die damit verbundene Verformung des Seitenbereichs des Kraftfahrzeugs eine von dem Sensor erfassbare Druckänderung bewirkt, woraufhin die Insassenschutzeinrichtung ausgelöst wird, z. B. durch Zünden eines Seitenairbags.

Da eine frühzeitige Erkennung eines bevorstehenden Aufpralls die Möglichkeit bietet, die Insassenschutzeinrichtung früher zu aktivieren, ergibt sich dadurch ein Potential zur Verbesserung des Insassenschutzes.

Der Erfindung liegt daher die Aufgabe zugrunde, ein Kraftfahrzeug anzugeben, das dazu ausgebildet ist, eine drohende Kollision früher zu detektieren, um die Insassenschutzeinrichtung früher auszulösen.

Zur Lösung dieser Aufgabe ist bei einem Kraftfahrzeug der eingangs genannten Art erfindungsgemäß vorgesehen, dass die Steuerungseinrichtung zum Detektieren einer vor einer Kollision auftretenden Druckwelle anhand des Luftdrucksignals und zum Auslösen der Insassenschutzeinrichtung bei einer detektierten Druckwelle ausgebildet ist.

Die Erfindung beruht auf der Erkenntnis, dass vor dem starken Druckanstieg, der herkömmlicherweise von einem Sensor oder einem Luftdrucksensor erfasst wird, bereits ein zuvor stattfindender Druckanstieg erfasst werden kann, der als Kriterium zum Auslösen der Insassenschutzeinrichtung herangezogen werden kann. Dieser vor dem kollisionsbedingten Druckanstieg auftretende Druckanstieg kann dadurch erklärt werden, dass vor dem anderen kollidierenden Fahrzeug eine Druckwelle (Bugwelle) entsteht, die kurzzeitig vor dem eigentlichen Aufprall von dem Sensor erfasst werden kann. Ein ähnliches Phänomen kann bei einem bevorstehenden Anprall gegen ein feststehendes Hindernis, z. B. einen Baum, beobachtet werden. Beim Erreichen eines bestimmten, relativ geringen Abstands zwischen dem Objekt oder Hindernis und dem Seitenbereich des Kraftfahrzeugs erfolgt eine Kompression der Luft in dem Zwischenraum, die als Druckwelle erfassbar ist.

Das von dem Sensor erfasste Luftdrucksignal wird durch die Steuerungseinrichtung ausgewertet. Wenn die Auswertung ergibt, dass es sich um eine vor einer Kollision auftretende Druckwelle handelt, wird die Insassenschutzeinrichtung ausgelöst. Auf diese Weise kann die Insassenschutzeinrichtung früher als bei herkömmlichen Kraftfahrzeugen ausgelöst werden, bei denen der Auslösevorgang erst bei dem mechanischen Aufprall beginnt. Auch wenn der durch die Erfindung erzielbare Zeitvorteil im Millisekundenbereich liegt, kann dennoch eine Verbesserung des Insassenschutzes erzielt werden.

Bei dem erfindungsgemäßen Kraftfahrzeug kann die Steuerungseinrichtung zum Detektieren der Druckwelle anhand der Dauer und/oder des Betrags und/oder des Anstiegs (Anstiegsgeschwindigkeit) des Luftdrucksignals ausgebildet sein. Die Steuerungseinrichtung ist somit in der Lage, eine vor einer Kollision auftretende Druckwelle anhand spezifischer Eigenschaften von anderen Druckschwankungen zu unterscheiden, die im normalen Fahrbetrieb durch Geschwindigkeitsänderungen, Seitenwindeinflüsse und dergleichen auftreten. Eine vor einer Kollision auftretende Druckwelle zeichnet sich durch bestimmte quantifizierbare Eigenschaften aus, die anhand des Luftdrucksignals überprüfbar beziehungsweise bestimmbar sind. Somit kann die Steuerungseinrichtung durch eine Berechnung feststellen, ob es sich bei einem erfassten Druckanstieg um eine Druckwelle vor einer bevorstehenden Kollision handelt, die sich durch ihre spezifischen Eigenschaften wie Dauer des Druckanstiegs, Betrag des Druckanstiegs und die Anstiegsgeschwindigkeit auszeichnet.

Bei dem erfindungsgemäßen Kraftfahrzeug wird es besonders bevorzugt, dass die Steuerungseinrichtung zum Auslösen der Insassenschutzeinrichtung vor der Kollision ausgebildet ist. Dadurch kann wertvolle Zeit gewonnen werden, um ein Insassenschutzsystem wie einen Airbag zu zünden. Durch die frühere Zündung hat der Airbag Zeit, sich früher zu entfalten, wodurch eine Verbesserung des Insassenschutzes bewirkt wird.

Ein optimaler Schutz der Fahrzeuginsassen ergibt sich, wenn die Insassenschutzeinrichtung des erfindungsgemäßen Kraftfahrzeugs an beiden Seiten des Kraftfahrzeugs wenigstens einen Sensor aufweist. Alternativ oder zusätzlich kann es vorgesehen sein, dass an einer Seite des Kraftfahrzeugs mehrere Sensoren an voneinander beabstandeten Positionen angeordnet sind.

Es ist besonders zweckmäßig, dass die Insassenschutzeinrichtung des erfindungsgemäßen Kraftfahrzeugs einen im Innenraum des Kraftfahrzeugs angeordneten Airbag aufweist. Vorzugsweise weist das Kraftfahrzeug wenigstens zwei im Innenraum des Kraftfahrzeugs an gegenüberliegenden Seiten angeordnete Airbags auf.

Der Sensor des erfindungsgemäßen Kraftfahrzeugs, der zum Erfassen des Luftdrucksignals ausgebildet ist, ist vorzugsweise in oder hinter einem Schweller oder in oder hinter einer B-Säule des Kraftfahrzeugs angeordnet. Die Anordnung erfolgt dabei jeweils so, dass der Sensor verdeckt ist, das heißt, er ist von außen nicht sichtbar.

Andererseits ist bei dem erfindungsgemäßen Kraftfahrzeug der Schweller oder die B-Säule oder eine Abdeckung, hinter der der Sensor angeordnet ist, so ausgebildet, dass eine durch eine Druckwelle ausgelöste Verformung von dem Sensor detektierbar ist. Wesentlich ist dabei, dass die Steifigkeit des Schwellers, der B-Säule oder der Abdeckung beziehungsweise die Steifigkeit eines Tür- oder Karosserieblechs so bemessen ist, dass eine auftretende Druckwelle eine zumindest minimale detektierbare Verschiebung bewirkt, die von dem Sensor erfassbar ist.

Weitere Vorteile und Einzelheiten der Erfindung werden nachfolgend anhand eines Ausführungsbeispiels unter Bezugnahme auf die Zeichnungen erläutert.

Die Zeichnungen sind schematische Darstellungen und zeigen:
- Fig. 1: ein erfindungsgemäßes Kraftfahrzeug in einer Seitenansicht; und
- Fig. 2: ein Diagramm, das den zeitlichen Verlauf des Luftdrucksignals bei einer Kollision zeigt.

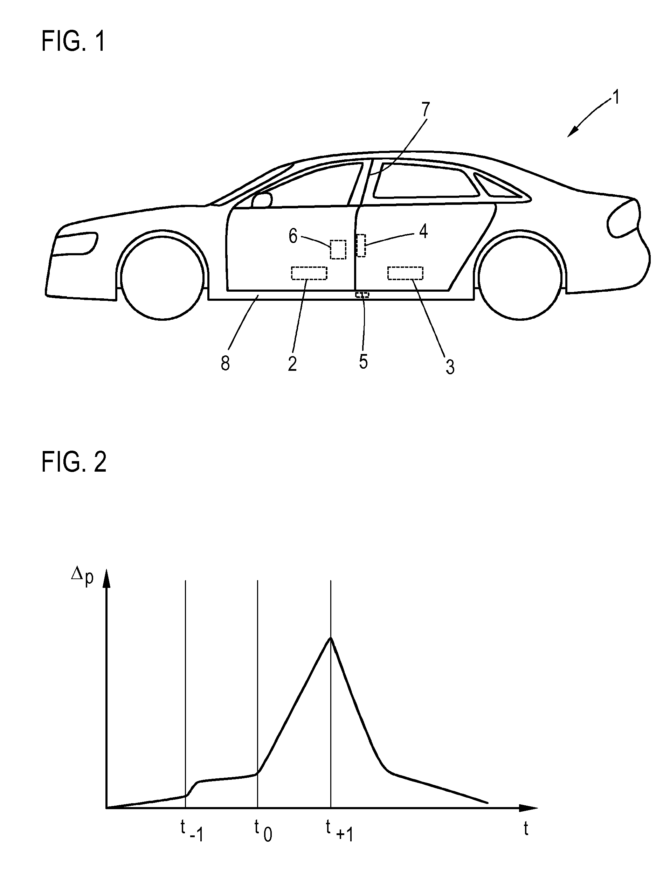

Das in Fig. 1 gezeigte Kraftfahrzeug 1 weist eine Insassenschutzeinrichtung auf, die Airbags 2, 3 umfasst. Die Airbags 2, 3 sind als Seitenairbags ausgebildet und an der linken Seite des Fahrersitzes und der Rücksitzbank angeordnet.

Die Insassenschutzeinrichtung umfasst ferner Sensoren 4, 5 zum Erfassen eines Luftdrucksignals und eine mit den Sensoren 4, 5 gekoppelte Steuerungseinrichtung 6. Aus Gründen der besseren Übersichtlichkeit sind Leitungsverbindungen zwischen der Steuerungseinrichtung 6 und den Sensoren 4, 5 und zwischen der Steuerungseinrichtung 6 und den Airbags 2, 3 nicht dargestellt.

Der Sensor 4 ist im Bereich der B-Säule 7 des Kraftfahrzeugs 1 angeordnet. Die Anordnung erfolgt so, dass der Sensor 4 von außen nicht sichtbar ist, da er sich hinter der Verkleidung der B-Säule 7 befindet. Der Sensor 5 ist im Inneren des Schwellers 8 angeordnet.

In dem dargestellten Ausführungsbeispiel sind zwei an unterschiedlichen Positionen angeordnete Sensoren 4, 5 vorgesehen, grundsätzlich ist jedoch ein einziger Sensor auf einer Fahrzeugseite ausreichend.

Die Sensoren 4, 5 sind zum Erfassen eines Luftdrucksignals ausgebildet, dementsprechend erzeugen sie permanent ein Luftdrucksignal, das der Steuerungseinrichtung 6 zugeführt wird.

Fig. 2 zeigt qualitativ den zeitlichen Verlauf des von einem Sensor gelieferten Luftdrucksignals vor und während einer Kollision. In dem dargestellten Ausführungsbeispiel enthält das Luftdrucksignal eine Information zu einer Änderung des Luftdrucks im Vergleich zu einem Bezugswert. Bei anderen Ausführungen kann das Luftdrucksignal auch einen absoluten Luftdruckwert angeben.

In Fig. 2 erkennt man, dass der Druck zum Zeitpunkt t₋₁ schlagartig ansteigt, zwischen den Zeitpunkten t₋₁ und t₀ ist ein Druckanstieg zu beobachten. Dieser Druckanstieg kann durch das Auftreten einer Druckwelle erklärt werden, die zwischen dem (eigenen) Kraftfahrzeug und einem Unfallgegner entsteht. Wesentlich ist dabei, dass diese Druckwelle von den Sensoren 4, 5 vor einer mechanischen Berührung der beiden Fahrzeuge bereits detektiert werden kann. Dasselbe gilt für eine bevorstehende Kollision mit einem Objekt. Die mechanische Berührung findet anschließend zum Zeitpunkt t₀ statt. Zwischen den Zeitpunkten t₀ und t₊₁ ist ein Druckanstieg mit größerer Steigung im Vergleich zu dem durch die Druckwelle verursachten Druckanstieg zu beobachten. Zwischen den Zeitpunkten t₀ und t₊₁ bewirkt der mechanische Aufprall und die damit einhergehende Verformung von Teilen der Fahrzeugkarosserie das Sensorsignal. Ab dem Zeitpunkt t₊₁ ist eine Rückgang des Luftdrucksignals zu beobachten.

Die Steuerungseinrichtung 6 ist zum Detektieren der Druckwelle ausgebildet. Die Detektion erfolgt durch Analyse der Dauer, des Betrags und der Anstiegsgeschwindigkeit des von den Sensoren 4, 5 gelieferten Luftdrucksignals. Für diese Parameter lassen sich gültige Wertebereiche angeben, so dass durch eine rechnerische Auswertung des Luftdrucksignals überprüft werden kann, ob es sich um eine unmittelbar vor einer Kollision auftretende Druckwelle oder nicht handelt. Auf diese Weise können Luftdruckschwankungen ausgeschlossen werden, die durch andere Einflüsse wie Geschwindigkeitsänderungen, Seitenwind oder dergleichen verursacht werden.

Wenn die Auswertung des Luftdrucksignals durch die Steuerungseinrichtung 6 ergeben hat, dass es sich um eine Druckwelle handelt, die eine bevorstehende Kollision ankündigt, wird durch die Steuerungseinrichtung 6 die Insassenschutzeinrichtung ausgelöst. Dementsprechend erfolgt das Auslösen der Insassenschutzeinrichtung zwischen den Zeitpunkten t₋₁ und t₀ und somit vor der mechanischen Berührung der Fahrzeuge. Dementsprechend werden die Airbags 2, 3 durch die Steuerungseinrichtung 6 aktiviert und gezündet, so dass die Entfaltung einige Millisekunden früher beginnt.

## Patentansprüche

1. Kraftfahrzeug (1) mit einer für den Seitenbereich des Kraftfahrzeugs (1) vorgesehenen Insassenschutzeinrichtung, mit einem im Seitenbereich angeordneten Sensor (4, 5) zum Erfassen eines Luftdrucksignals und einer Steuerungseinrichtung (6), die zum Auswerten des Luftdrucksignals und zum Auslösen der Insassenschutzeinrichtung in Abhängigkeit des ausgewerteten Luftdrucksignals ausgebildet ist,
**dadurch gekennzeichnet,**
**dass** die Steuerungseinrichtung (6) zum Detektieren einer vor einer Kollision auftretenden Druckwelle anhand des Luftdrucksignals und zum Auslösen der Insassenschutzeinrichtung bei einer detektierten Druckwelle ausgebildet ist.

2. Kraftfahrzeug nach Anspruch 1,
**dadurch gekennzeichnet,**
**dass** die Steuerungseinrichtung (6) zum Detektieren der Druckwelle anhand der Dauer und/oder des Betrags und/oder des Anstiegs des Luftdrucksignals ausgebildet ist.

3. Kraftfahrzeug nach Anspruch 1 oder 2,
**dadurch gekennzeichnet,**
**dass** die Steuerungseinrichtung (6) zum Auslösen der Insassenschutzeinrichtung vor der Kollision ausgebildet ist.

4. Kraftfahrzeug nach einem der vorangehenden Ansprüche,
**dadurch gekennzeichnet,**
**dass** die Insassenschutzeinrichtung an beiden Seiten des Kraftfahrzeugs (1) wenigstens einen Sensor (4, 5) aufweist.

5. Kraftfahrzeug nach einem der vorangehenden Ansprüche,
**dadurch gekennzeichnet,**
**dass** die Insassenschutzeinrichtung einen, vorzugsweise wenigstens zwei, im Innenraum des Kraftfahrzeugs an gegenüberliegenden Seiten angeordnete Airbags (2, 3) umfasst.

6. Kraftfahrzeug nach einem der vorangehenden Ansprüche,
**dadurch gekennzeichnet,**
**dass** der Sensor (4, 5) in oder hinter einem Schweller (8) oder in oder hinter einer B-Säule (7) des Kraftfahrzeugs angeordnet ist.

7. Kraftfahrzeug nach Anspruch 6,
**dadurch gekennzeichnet,**
**dass** der Schweller (8) oder die B-Säule (7) oder eine Abdeckung, hinter der der Sensor (4, 5) angeordnet ist, so ausgebildet ist, dass eine durch die Druckwelle ausgelöste Verformung von dem Sensor (4, 5) detektierbar ist.

8. Verfahren zum Auslösen einer Insassenschutzeinrichtung eines Kraftfahrzeugs, umfassend die folgenden Schritte:
- Erfassen eines Luftdrucksignals mit einem im Seitenbereich eines Kraftfahrzeugs angeordneten Sensors;
- Auswerten des Luftdrucksignals durch eine Steuerungseinrichtung;
- Detektieren einer vor einer Kollision auftretenden Druckwelle durch die Steuerungseinrichtung anhand des Luftdrucksignals; und
- Auslösen der Insassenschutzeinrichtung bei einer detektierten Druckwelle.

9. Verfahren nach Anspruch 8,
**dadurch gekennzeichnet,**
**dass** bei der Auswertung des Luftdrucksignals durch die Steuerungseinrichtung die Dauer der Druckwelle und/oder der Betrag des Luftdrucksignals und/oder der Anstieg des Luftdrucksignals ausgewertet wird.

## Claims

1. Motor vehicle (1) comprising an occupant protection device provided for the side region of the motor vehicle (1), having a sensor (4, 5) arranged in the side region for detecting an air pressure signal and a control device (6) which is configured to evaluate the air pressure signal and to trigger the occupant protection device on the basis of the evaluated air pressure signal, **characterised in that** the control device (6) is configured to detect a pressure wave occurring before a collision on the basis of the air pressure signal and to trigger the occupant protection device when a pressure wave is detected.

2. Motor vehicle according to claim 1, **characterised in that** the control device (6) is configured to detect the pressure wave on the basis of duration of and/or magnitude of and/or rise in the air pressure signal.

3. Motor vehicle according to either claim 1 or claim 2, **characterised in that** the control device (6) is configured to trigger the occupant protection device before the collision.

4. Motor vehicle according to any of the preceding claims, **characterised in that** the occupant protection device comprises at least one sensor (4, 5) arranged on both sides of the motor vehicle (1).

5. Motor vehicle according to any of the preceding claims, **characterised in that** the occupant protection device comprises one, preferably at least two, airbags (2, 3) arranged on opposite sides inside the motor vehicle.

6. Motor vehicle according to any of the preceding claims, **characterised in that** the sensor (4, 5) is arranged in or behind a sill (8) or in or behind a B-pillar (7) of the motor vehicle.

7. Motor vehicle according to claim 6, **characterised in that** the sill (8) or the B-pillar (7) or a cover, behind which the sensor (4, 5) is arranged, is configured such that deformation caused by the pressure wave can be detected by the sensor (4, 5).

8. Method for triggering an occupant protection device of a motor vehicle, comprising the following steps:
- detecting an air pressure signal using a sensor arranged in the side region of a motor vehicle;
- evaluating the air pressure signal using a control device;
- detecting a pressure wave occurring before a collision, using the control device, on the basis of the air pressure signal; and
- triggering the occupant protection device when a pressure wave is detected.

9. Method according to claim 8, **characterised in that**, when the air pressure signal is evaluated by the control device, the duration of the pressure wave and/or the magnitude of the air pressure signal and/or the rise in the air pressure signal is/are evaluated.

## Revendications

1. Véhicule automobile (1) avec un dispositif de protection d'occupant prévu pour la zone latérale du véhicule automobile (1), avec un capteur (4, 5) qui est agencé dans la zone latérale et qui est destiné à acquérir un signal de pression d'air et avec un dispositif de commande (6) qui est conçu pour évaluer le signal de pression d'air et pour déclencher le dispositif de protection d'occupant en fonction du signal de pression d'air évalué,
**caractérisé en ce que** le dispositif de commande (6) est conçu pour détecter une onde de pression apparaissant avant une collision à l'aide du signal de pression d'air et pour déclencher le dispositif de protection d'occupant lorsqu'une onde de pression est détectée.

2. Véhicule automobile selon la revendication 1, **caractérisé en ce que** le dispositif de commande (6) est conçu pour détecter l'onde de pression à l'aide de la durée et/ou de la valeur et/ou de l'augmentation du signal de pression d'air.

3. Véhicule automobile selon la revendication 1 ou 2, **caractérisé en ce que** le dispositif de commande (6) est conçu pour déclencher le dispositif de protection d'occupant avant la collision.

4. Véhicule automobile selon l'une des revendications précédentes, **caractérisé en ce que** le dispositif de protection d'occupant comporte au moins un capteur (4, 5) des deux côtés du véhicule automobile (1).

5. Véhicule automobile selon l'une des revendications précédentes, **caractérisé en ce que** le dispositif de protection d'occupant comprend un coussin gonflable et de préférence au moins deux coussins gonflables (2, 3) agencés dans l'habitacle du véhicule automobile au niveau des côtés opposés.

6. Véhicule automobile selon l'une des revendications précédentes, **caractérisé en ce que** le capteur (4, 5) est agencé dans ou derrière un longeron (8) ou dans ou derrière un montant central B (7) du véhicule automobile.

7. Véhicule automobile selon la revendication 6, **caractérisé en ce que** le longeron (8) ou le montant B (7) ou une couverture, derrière laquelle le capteur (4, 5) est agencé, est conçu de telle sorte qu'une déformation créée par l'onde de pression est détectable par le capteur (4, 5).

8. Procédé pour déclencher un dispositif de protection d'occupant d'un véhicule automobile, comprenant les étapes suivantes :
- acquérir un signal de pression d'air avec un capteur agencé dans la zone latérale d'un véhicule automobile ;
- évaluer le signal de pression d'air au moyen d'un dispositif de commande ;
- détecter une onde de pression apparaissant avant une collision au moyen du dispositif de commande à l'aide du signal de pression d'air ; et
- déclencher le dispositif de protection d'occupant lorsqu'une onde de pression est détectée.

9. Procédé selon la revendication 8, **caractérisé en ce que**, lors de l'évaluation du signal de pression d'air par le dispositif de commande, on évalue la durée de l'onde de pression et/ou la valeur du signal de pression d'air et/ou l'augmentation du signal de pression d'air.
